# EUROPÄISCHE PATENTSCHRIFT

(11) **EP 1 382 136 B1**
(45) Veröffentlichungstag und Bekanntmachung des Hinweises auf die Patenterteilung: **17.03.2010**
(21) Anmeldenummer: 02702318.3
(22) Anmeldetag: 28.01.2002
(51) Int. Cl.: H04B 7/26

(54) **VERFAHREN UND KOMMUNIKATIONSVORRICHTUNG ZUM SYNCHRONISIEREN VON STATIONEN IN EINEM FUNK-KOMMUNIKATIONSSYSTEM**
METHOD AND COMMUNICATION DEVICE FOR SYNCHRONISING STATIONS IN A RADIO COMMUNICATIONS SYSTEM
PROCEDE ET DISPOSITIF DE COMMUNICATION POUR LA SYNCHRONISATION DE STATIONS DANS UN SYSTEME DE COMMUNICATION RADIO

(30) Priorität: 14.02.2001 DE 10106807; 14.02.2001 EP 01103433
(43) Veröffentlichungstag der Anmeldung: 21.01.2004
(73) Patentinhaber: Nokia Siemens Networks GmbH & Co. KG, 81541 München (DE)
(72) Erfinder: SCHMITZ, Heiko, 13347 Berlin (DE); LEHMANN, Gerald, 12101 Berlin (DE); JARBOT, Lutz, 13465 Berlin (DE)
(86) Internationale Anmeldenummer: PCT/EP2002/000867
(87) Internationale Veröffentlichungsnummer: WO 2002/065669

(56) Entgegenhaltungen:
- EP-A- 0 903 873
- WO-A-01/08344
- DE-A- 19 849 458
- US-A- 5 363 375

## Beschreibung

Die Erfindung bezieht sich auf ein Verfahren zum Synchronisieren von Stationen in einem Funk-Kommunikationssystem mit den oberbegrifflichen Merkmalen des Patentanspruchs 1 bzw. eine Kommunikationsvorrichtung mit Einrichtungen zum Durchführen eines solchen Verfahrens.

Bei digitalen Funk-Kommunikationssystemen, beispielsweise dem Mobilfunksystem GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle dient als eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen.

Um den Bedarf des zur Verfügung stehenden Spektrums an der knappen Ressource "Trägerfrequenz" besser zu decken, wurden synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt. Hierzu wird in Absprache zwischen Sender und Empfänger unter Einbeziehung eventueller Vermittlungsknoten ein vorgegebenes Raster aus sende- und empfangssynchronen Frequenzbändern, Zeitschlitzen und/oder Codesequenzen genutzt. Die Sender ordnen die Daten der einzelnen Verbindungen diesem Raster zu und die Empfänger separieren aus dem empfangenen Datenstrom die für sie bestimmten Daten. Für die dritte Mobilfunkgeneration UMTS (Universal Mobile Telecommunications System) sind z.B. zwei Modi vorgesehen, wobei ein Modus einen FDD-Betrieb (Frequency Division Duplex) und der andere Modus einen TDD-Betrieb (Time Division Duplex) zugrunde legt. Diese Modi finden ihre Anwendung in unterschiedlichen Frequenzbändern, wobei beide Modi ein codeteilendes CDMA-Teilnehmer-Separierungsverfahren (CDMA: Code Division Multiple Access) unterstützen.

Bei solchen Kommunikationssystemen, insbesondere einem Mobilfunksystem mit CDMA-Komponente, bei dem die einzelnen Teilnehmerstationen oder einzelne Verbindungen durch die Verwendung von verschiedene Spreiz- und Scramblingcodes unterschieden werden, ist ein unkoordinierter Betrieb der einzelnen Teilnehmer nicht möglich. Voraussetzung ist eine zuvor geplante zellulare Netzstruktur, in der sich ortsfeste Basisstationen befinden. Mittels einer solchen Anordnung sind eine Codevergabe und deren Optimierung nur zentral möglich. Insbesondere ist eine Synchronisierung auf eine gemeinsame Taktung und/oder Frequenz verschiedener miteinander kommunizierender Stationen erforderlich.

Zur Erfüllung dieser Forderungen wird eine zentrale Steuerung der Codezuweisung, der zeitlichen Synchronität und der einzelnen Sendeleistungen eingesetzt. Dies kann mit der bekannten zellularen Struktur von Mobilfunksystemen aufwandsgünstig erreicht werden, wobei Codezuweisung, Leistungsregelung und zeitliche Steuerung der Mobilfunk-Teilnehmerstationen zentral durch eine Basisstation innerhalb der Zelle ausgeführt werden. Man spricht hier von koordinierten aber auch durch Netzplanung optimierten Systemen, die bei allen öffentlichen und lizensierten Mobilfunksystemen Anwendung finden. Es handelt sich aber nicht um dezentrale Verfahren zur Synchronisierung oder Codevergabe, sondern um Verfahren, die nur den Betrieb eines koordinierten Funksystems ermöglichen.

Bei bisher bekannten Mobilfunksystemen wird somit von einem geplanten zellularen Netzwerk mit ortsfesten Basisstationen ausgegangen. Unter diesen Voraussetzungen kann angenommen werden, dass die Basisstationen mit einem genauen Frequenznormal ausgestattet sind und über einen Synchronisierungskanal ein in der Regel bekanntes Signal aussenden. Mit Hilfe dieses Signals können sich die mobilen Teilnehmerstationen in Frequenz und Zeit synchronisieren. Nach erfolgreicher Synchronisation können dann von der mobilen Teilnehmerstation weitere Informationen auf anderen Kanälen empfangen und gelesen werden, die von der Basisstation ausgesendet werden. In einem Netz, in dem es keine ortsfesten Basisstationen gibt oder in dem Basisstationen nur in geringer Dichte aufgestellt sind, können sich die mobilen Teilnehmerstationen nicht synchronisieren.

Innerhalb solcher Kommunikationssysteme, insbesondere innerhalb von Mobilfunksystemen mit TDMA-Komponente, fehlt jedoch ein Synchronisierungsverfahren, das einen unkoordinierten Betrieb der einzelnen Teilnehmerstationen ermöglicht. Bei Systemen, bei denen nicht von einer zuvor geplanten zellularen Netzstruktur ausgegangen werden kann, in der sich zentrale ortsfeste Basisstationen befinden, ist eine erforderliche Synchronisierung unabhängiger Basis- oder Teilnehmerstationen nicht möglich. Insbesondere besteht das Problem, wie sich einzelne Stationen untereinander in Frequenz und Zeit synchronisieren, wenn nicht immer auf eine ortsfeste Referenz, wie z.B. auf eine Basisstation mit höherer Frequenzgenauigkeit, zurückgegriffen werden kann.

Aus US 5,363,375 ist ein TDM/TDMA-Funkkommunikationssystem bekannt, bei dem eine Anzahl sogenannter "Ports" mit einer definierten Zeitreferenz verbunden sind und als sogenannte "Masterports" dienen. Diesen Masterports wird ein hierarchischer Wert von "0" zugewiesen. Weiteren Ports wird hingegen ein höherer hierarchischer Wert zugeordnet, bevor diese sich iterativ zeitlich auf den jeweils nächstgelegenen Masterport synchronisieren.

Aus DE 198 49 458 ist ein drahtloses Netzwerk mit einer Taktsynchronisation bekannt. Das Netzwerk weist mehrere Netzknoten auf, wobei ein sogenannter Hauptnetzknoten ein vom Takt seiner Taktversorgung abhängiges Synchronisationsmuster über eine Funkvorrichtung aussendet. Alle anderen als Nebennetzknoten bezeichneten Netzknoten sind verschiedenen hierarchisch geordneten Abstandsklassen in Abhängigkeit von ihrem Abstand zum Hauptnetzknoten zugeordnet. Alle Nebennetzknoten einer Abstandsklasse senden ein von dem Takt ihrer jeweiligen Taktversorgung abhängiges, die Abstandsklasse kennzeichnendes Synchronisationsmuster über ihre jeweilige Funkvorrichtung aus Ein Nebennetzknoten synchronisiert seine Taktversorgung durch wenigstens ein empfangenes Synchronisationsmuster einer hierarchisch höheren Abstandsklasse.

Die Aufgabe der Erfindung besteht darin, ein verbessertes Verfahren bzw. ein System zum Synchronisieren von FunkStationen untereinander in Frequenz und/oder Zeit für den Fall vorzuschlagen, dass nicht oder zeitweilig nicht auf eine ortsfeste Referenz zurückgegriffen werden kann.

Diese Aufgabe wird durch das Verfahren mit den Merkmalen des Patentanspruchs 1 bzw. durch ein Funkkommunikationssystem mit den Merkmalen des Anspruchs 11 gelöst.

Vorteilhafterweise kann durch das Verfahren zum Synchronisieren von Stationen in einem Funk-Kommunikationssystem, bei dem zur Synchronisierung anderer Stationen von einer Station ein Synchronisierungssignal über die Schnittstelle übertragen wird und das Synchronisierungssignal entsprechend der eigenen Synchronisierung dieser Station erzeugt und übertragen wird eine Synchronisierung anderer Stationen dezentral und temporär erfolgen, wobei die zumeist mobilen Stationen nicht untereinander bekannt oder koordiniert sein müssen. Bei einem solchen System muss entsprechend auch nicht mehr von einer zuvor geplanten zellularen Netzstruktur ausgegangen werden, in der sich zentrale ortsfeste Basisstationen befinden. In einem Netz, in dem es keine ortsfesten Basisstationen gibt oder in dem Basisstationen nur in geringer Dichte aufgestellt sind, können sich entsprechend ausgestattete Kommunikationsvorrichtungen, insbesondere mobile Teilnehmerstationen adhoc untereinander synchronisieren. Insbesondere kann eine netzweite grobe Synchronisation verschiedener Stationen erreicht werden, wobei die Synchronisierung von Station zu Station weitergegeben wird.

Vorteilhafte Ausgestaltungen sind Gegenstand von abhängigen Ansprüchen.

Wenn das Synchronisierungssignal oder ein weiteres Signal den momentanen Synchronisierungsgrad der Station signalisiert, können andere das Synchronisierungssignal empfangende Stationen feststellen, ob dieses empfangene Synchronisierungssignal zu einer Verbesserung der eigenen Synchronisierung führen kann.

Insbesondere die Form und/oder die Häufigkeit der Übertragung des Synchronisierungssignals oder ein in dem Signalisierungssignal übertragener Wert des Synchronisierungsgrads können verwendet werden, um den momentanen Synchronisierungsgrad der Station zu signalisieren, die das Synchronisierungssignal aussendet. Dadurch können sich Stationen mit niedrigem Synchronisierungsgrad nach Stationen mit höherem Synchronisierungsgrad synchronisieren.

Wenn die sich synchronisierende Station ihren Synchronisierungsgrad um zumindest eine Einheit gegenüber dem Synchronisierungsgrad der das Synchronisierungssignal sendenden Station erniedrigt, kann berücksichtigt werden, dass bei einer solchen Synchronisierung oftmals eine Verschlechterung der Synchronisierung ergibt. Entsprechend kann auch berücksichtigt werden, das sich die Synchronisierung mit der Zeit verschlechtert, wenn die synchronisierte Station ihren Synchronisierungsgrad pro vorbestimmter verstrichener Zeitdauer seit ihrer letzten eigenen Synchronisierung reduziert.

Um zu verhindern, dass eine Station sich nach einer schlecht synchronisierten Station synchronisiert, kann festgelegt werden, dass die Station nach Unterschreiten eines niedrigsten oder eines festgelegt niedrigen Wertes kein Synchronisierungssignal überträgt. Die Station überträgt jedoch zweckmäßigerweise trotz Unterschreiten eines niedrigsten oder eines festgelegt niedrigen Wertes ein Synchronisierungssignal, falls kein anderes Synchronisierungssignal auf der Schnittstelle detektiert wird, um eine Kommunikation zwischen zwei Stationen entfernt von anderen Stationen zu ermöglichen.

Die Verwendung eines solchen Verfahrens und/oder einer entsprechenden Kommunikationsvorrichtung ist in einem unkoordinierten Mobilfunksystem mit zellularer und/oder nichtzellularer Struktur möglich. Insbesondere Stationen in einem Mobilfunksystem mit TDMA- und/oder FDMA- und/oder CDMA-Betriebsart können um derartige Funktionen zur Synchronisierung erweitert werden.

Ein Ausführungsbeispiel wird nachfolgend anhand der Zeichnung näher erläutert. Es zeigt:

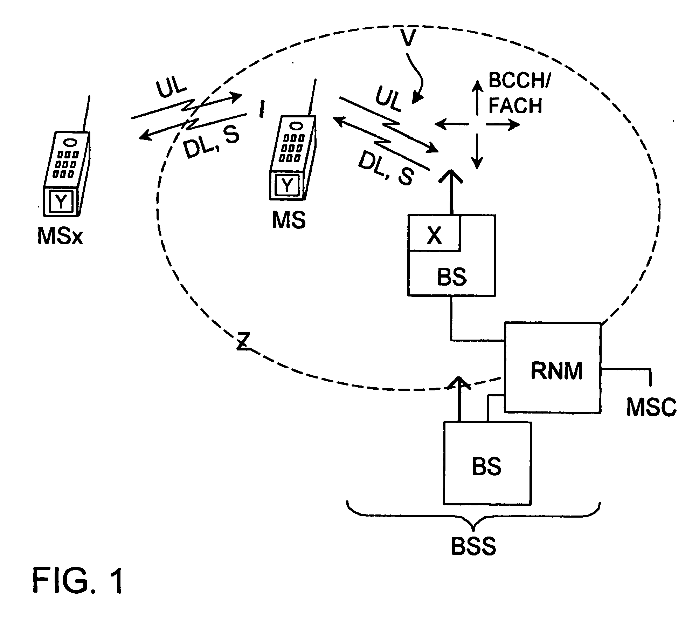

Fig. 1 eine einfache Form eines Funk-Kommunikationsnetzes mit einer Kommunikationsverbindung zwischen einer Netzstation und einer Teilnehmerstation sowie dieser Teilnehmerstation und einer weiteren Teilnehmerstation.

Wie aus Fig. 1 ersichtlich, ist das nachfolgend beschriebene Verfahren insbesondere in einem Kommunikationssystem, z.B. einem Mobilfunksystem anwendbar. Das beispielhaft dargestellte Mobilfunksystem als ein für sich bekanntes Funk-Kommunikationssystem weist eine Vielzahl von Netzelementen auf, insbesondere netzseitig Mobilvermittlungsstellen MSC, Einrichtungen RNM zum Zuteilen von funktechnischen Ressourcen, als Sende-/Empfangseinrichtungen Basisstationen BS und teilnehmerseitig in der untersten Hierarchieebene als Sende-/Empfangseinrichtungen Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle V eine Verbindung zu Teilnehmerstationen, z.B. mobilen Stationen MS oder anderweitigen mobilen und stationären Endgeräten aufbauen. Durch jede Basisstation BS wird vorteilhafterweise zumindest eine Funkzelle Z gebildet. Bei einer Sektorisierung oder bei hierarchischen Zellstrukturen werden pro Basisstation BS auch mehrere Funkzellen Z versorgt. Beim vorliegenden Ausführungsbeispiel mit eigenständiger Synchronisierung von Stationen untereinander, sind solche Einrichtungen und die Bereitstellung von Zellen Z jedoch auch gänzlich entbehrlich.

In Fig. 1 ist beispielhaft eine bestehende Verbindung V zur Übertragung von Nutzinformationen und Signalisierungsinformationen zwischen einer mobilen Station MS und einer Basisstation BS dargestellt. Übertragungen in Aufwärtsrichtung UL (Uplink) erfolgen von der Basisstation BS zur mobilen Station MS, Übertragungen in Abwärtsrichtung DL (Down Link) in umgekehrter Richtung. Weiterhin ist ein Organisierungskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS im Bereich der Funkzelle Z bereitgestellt wird. Insbesondere können mit derartigen Organisierungskanälen auch Synchronisierungsinformationen zur Synchronisierung einer Teilnehmerstation hinsichtlich Zeit und Frequenz übertragen werden.

Gemäß einem bevorzugten Ausführungsbeispiel weisen die Teilnehmerstation MS und/oder eine Netzstation, wie die Basisstation BS, eine Einrichtung Y bzw. X auf, die zum eigenständigen Synchronisieren der Station anhand empfangener Signale ausgelegt ist. Diese Einrichtung wertet dazu bevorzugt spezielle, nachfolgend beschriebene Synchronisierungssignale S beliebiger anderer Stationen oder sonstiger Signalquellen mit z.B. einer festen Taktung aus.

Für das dabei angewendete Synchronisierungsverfahren werden von Stationen oder vorhandenen festen Synchronisierungsquellen auf der Luftschnittstelle entsprechend bei den zu synchronisierenden Stationen MS, BS auswertbare Synchronisierungssignale S ausgesendet.

Vorteilhafterweise senden auch die mobilen Teilnehmerstationen MS solche Synchronisierungssignale S aus. Dadurch kann eine andere Station MSx, die sich außerhalb der Reichweite der Basisstation BS aber innerhalb der Reichweite der Teilnehmerstation MS befindet, ebenfalls ein Synchronisierungssignal S empfangen und sich relativ zu der Teilnehmerstation MS synchronisieren. Dieses Verfahren setzt dadurch vorteilhafterweise keine zellulare Netzstruktur voraus.

Die Teilnehmerstation MS sendet insbesondere in Abhängigkeit von ihrer momentan erreichten, z.B. in Stufen eingeteilten Synchronisierungsgenauigkeit, im folgenden Synchronisierungsgrad genannt, ein solches Synchronisierungssignal in bestimmter Häufigkeit aus. Mit der Art oder einem bestimmten Wert des Synchronisierungssignales wird signalisiert, welche Genauigkeit diese Teilnehmerstation MS hinsichtlich ihrer Zeit und/oder Frequenz hat. Damit wird auch innerhalb eines unkoordinierten Netzes eine Hierarchie eingeführt.

Der Synchronisierungsgrad kann entsprechend in eine Anzahl von Stufen, z.B. 32 Stufen, eingeteilt werden. Ortsfeste Stationen mit exakter bzw. sehr genauer Referenz signalisieren regelmäßig den höchsten Synchronisierungsgrad. Auf dieses Synchronisierungssignal sollten sich alle mobilen Teilnehmerstationen MS, MSx synchronisieren.

Teilnehmerstationen mit geringerem Synchronisierungsgrad können sich so nach Teilnehmerstationen mit höherem Synchronisierungsgrad synchronisieren. Empfängt eine Teilnehmerstation MS, MSx verschiedene Synchronisierungssignale S, so wählt sie das Synchronisierungssignal S mit dem höchsten Synchronisierungsgrad aus.

Vorzugsweise registrieren bzw. übernehmen die weiteren Teilnehmerstationen MSx ihre Synchronisierung um eine Einheit erniedrigt. Bei der Synchronisation bzw. bei Übernahme des Synchronisierungsgrades wird der Synchronisierungsgrad entsprechend um eine Stufe erniedrigt werden, um dadurch den möglichen Ungenauigkeiten während des Synchronisierungsprozesses Rechnung zu tragen.

Es ist zu erwarten, dass aufgrund einer Drift des lokalen Oszillators in den Teilnehmerstationen MS, MSx der Synchronisierungsgrad mit der Zeit abnehmen wird. Diese Drift ist je nach Güte der Oszillatorschaltung unterschiedlich und auch von Schwankungen der Umgebungstemperatur und der Versorgungsspannung der Schaltung abhängig. Dennoch kann ein mittlerer "worst-Case" bzw. Schlechtestfall-Wert für eine Station bestimmt werden, der als Parameter für die kontinuierliche Reduzierung des Synchronisierungsgrades über die Zeit verwendet werden kann. Eine Reduzierung von z.B. 1 ppm/min führt dazu, dass der Synchronisierungsgrad pro Minute reduziert wird, was wiederum das auszusendende Synchronisierungssignal verändert.

Der aktuelle Synchronisierungsgrad der Station MS, MSx kann auch die Häufigkeit bestimmen, mit der das Synchronisierungssignal abgestrahlt wird. Bei kleineren Grad wird das Signal entsprechend seltener abgestrahlt. Nach Unterschreiten der niedrigsten oder einer festgelegten niedrigen Stufe soll kein Synchronisierungssignal abgestrahlt werden. Falls kein anderes Signal auf der Luftschnittstelle detektiert wird, kann jedoch trotzdem noch ein Synchronisierungssignal S ausgesendet werden, um zwei unabhängige Teilnehmerstationen MS und MSx untereinander zu synchronisieren.

So ist es z.B. auch möglich, bei gewählter Beispielparametrisierung von 32 Stufen und einer maximalen Drift von 1 ppm/min während einer Zeitspanne von über 30 Minuten den Synchronisierungsgrad herunterzusetzen, wenn während dieser Zeit keine erneuter Synchronisierungsvorgang möglich war. Die Wahrscheinlichkeit, dass gerade bei einer mobilen Teilnehmerstation MS während dieser Zeitspanne ein Synchronisierungssignal mit höheren Synchronisierungsgrad detektiert wird, ist relativ hoch. Je nach Mobilität und Dichte der Teilnehmerstationen Ms, MSx kann so für alle Teilnehmerstationen in einem Netz eine grobe, insbesondere zeitliche Synchronisation erreicht werden, um z.B. eine Zeitschlitzstruktur, wie sie bei TDMA-Systemen verwendet wird, zu erstellen oder aufrecht zu erhalten.

Außerdem ist es mit diesem Verfahren möglich, einen hohen Synchronisierungsgrad, welcher z.B. von einer ortsfesten Station BS verbreitet wird, durch Mehrfachweitergabe ("multihops") über weitaus größere Fläche zu verteilen, als die Reichweite der ortsfesten Station BS alleine zulassen würde.

Vorteilhafterweise sollte die Anzahl der Synchronisierungsweitergaben beschränkt werden. Dies kann insbesondere dadurch erreicht werden, dass wie vorstehend beschrieben, bei jedem Synchronisierungsvorgang der weitergereichte Synchronisierungsgrad um eine Einheit erniedrigt wird. Bei dem Parametrisierungsbeispiel würde dies bedeuten, dass maximal 31 Hops bzw. Weitergaben möglich wären.

Durch die Anpassung des von der jeweiligen Teilnehmerstation ausgesendeten Synchronisierungssignals in Form und Häufigkeit in Abhängigkeit vom Synchronisierungsgrad soll erreicht werden, dass die Synchronisierungssignale der Teilnehmerstationen sicherer und öfter detektiert werden können, die einen höheren oder sichereren Synchronitätsgrad besitzen.

Wird die "Form" des Synchronisierungssignales als Parameter für den Synchronisierungsgrad gewählt, kann die Form z.B. durch zeitliche Länge, Signalleistung, zeitliche Position innerhalb eines Fensters, Belegung der Träger bei Mehrträgersystemen, Verwendung von bestimmten Codes oder Codegruppen bei CDMA-Systemen bestimmt werden. So ist es offensichtlich, dass die Signale, die eine größere Signalleistung haben und/oder eine längere Zeit belegen und/oder in reservierten Positionen in einem Zeitrahmen ausgesendet werden und/oder durch bestimmte Trägerbelegungsmuster bei Mehrträgerverfahren definiert sind und/oder reservierte Codes bei CDMA-Systemen verwenden und/oder öfter ausgesendet werden eine höhere Detektionswahrscheinlichkeit besitzen und somit einen sicheren und genaueren Synchronisierungsvorgang ermöglichen.

Durch die Einführung eines solchen hierarchischen Synchronisierungsverfahrens, bei dem mit Hilfe von bestimmten Synchronisierungssignalen die Synchronisierungsgenauigkeit des Senders in Stufen signalisiert wird, wird die gegenseitige Synchronisation von zuvor unkoordinierten Teilnehmerstationen in sogenannten adhoc Netzwerken innerhalb eines Genauigkeitsbereiches ermöglicht. Unter Verwendung dieser Synchronisierungssignale werden vorteilhafterweise weitere Regeln eingeführt, bei denen die höchstmögliche Synchronisierungsgenauigkeit unter einer Gruppe von zuvor nicht synchronisierten Teilnehmerstationen erreicht wird und eine Synchronität über eine weitaus größere Fläche erreicht wird.

Dieses Verfahren kann innerhalb eines Kommunikationssystems für mobile Teilnehmerstationen, z.B. bei fahrzeug-basierten Teilnehmerstationen, angewendet werden. Ein solches Kommunikationssystem kann für Flottenmanagement, Verkehrslenkung, Fahrer-Information und für Anwendungen zur Erhöhung der Verkehrssicherheit eingesetzt werden, wie dies bei dem sogenannten FleetNet-Projekt des deutschen Bundesministeriums für Forschung und Technologie geplant ist.

Vorteilhafterweise kann ein bestehendes standardisiertes Mobilfunksystem, wie z.B. mit der UMTS TDD-Betriebsart, durch dieses Verfahren für den Einsatz in unkoordinierten fahrzeug-basierten Netzen angepaßt werden und damit die notwendige gegenseitige Synchronisation ermöglicht werden. Die UTRA TDD-Betriebsart verwendet als Vielfachzugriffsverfahren eine CDMA- und TDMA-Komponente. Die TDMA-Komponente kann allerdings nur dann genutzt werden, wenn alle Teilnehmerstationen zumindest grob zeitlich synchronisiert sind. Aber auch das Vielfachzugriffsverfahren auf Code-Ebene setzt prinzipiell eine zeitliche Synchronisation voraus.

Bei dem UTRA TDD-System sind die einzelnen Zeitschlitze mit Hilfe eines Schutzintervalls getrennt, welches derzeit ca. 25 µs lang ist. Das Ziel sollte entsprechend darin bestehen, eine zeitliche Synchronisation innerhalb des halben Schutzintervalls von ca. 12 µs zu erreichen. Bei einer angenommenen Worst-case-Drift von 1 ppm/min kann berechnet werden, dass sich die Teilnehmerstation für mehr als 30 Minuten innerhalb dieses Genaugkeitsbereiches von +- 12 µs befinden. Soll eine Funkverbindung zwischen zwei Teilnehmerstationen MS und MSx aufgebaut werden, so kann in einem weiteren Synchronisierungsschritt die notwendig höhere Synchronisierungsgenauigkeit zwischen diesen beiden Teilnehmerstationen MS, MSx hergestellt werden.

Für z.B. fahrzeugbasierte Anwendungen wird nur eine sehr geringe Dichte ortsfester Stationen (access points) geplant, die eine genaue Frequenzreferenz (z.B. GPS unterstützt) besitzen, wohingegen die Anzahl von fahrzeuggebundenen Sender/Empfängerstationen (Transceivern) bzw. Teilnehmerstationen MS, MSx dahingegen vergleichsweise sehr hoch geplant ist. Als Stationen mit einer Frequenzreferenz können insbesondere Stationen mit einem GPS-Empfänger (GPS: Global Positioning System) eingesetzt werden. Insbesondere die hohe Mobilität der Teilnehmerstationen MS, MSx und die beschriebenen Mehrfachweitergaben / Multihops unterstützen dieses Verfahren und stellen sicher, dass sich alle in diesem Netzwerk befindenden Teilnehmer zeitlich synchronisieren können.

Auch ein Teil der mobilen Teilnehmerstationen kann mit GPS-Empfängern, z.B. zur Unterstützung der Navigation eines Fahrzeugs, ausgestattet sein. Allerdings können die Anforderungen bei dieser Klasse von GPS-Empfängern an eine Frequenz- und Zeitgenauigkeit nicht so hoch gestellt werden. Außerdem führt die durch Abschattung nur bedingte Verfügbarkeit des GPS-Signales bei mobilen GPS-Empfängern dazu, dass diese Referenz zeitweise nur mit reduzierter Genauigkeit verwendet werden kann. Dennoch ist es vorteilhaft, wenn mit Hilfe des GPS-Empfängers im Fahrzeug ein mittlerer bis schlechter Synchronisierungsgrad durch interne Synchronisation mit Hilfe der GPS-Referenz auf einen besseren Synchronisierungsgrad verbessert werden kann, wenn das GPS-Signal zu diesem Zeitpunkt mit vergleichsweise höherer Frequenz- und Zeitgenauigkeit verfügbar ist. Durch das zuvor beschriebene Verfahren ist es möglich, dass sich andere mobile Teilnehmerstationen auf diese Teilnehmerstationen aufsynchronisieren und somit ihren Synchronisierungsgrad ebenfalls verbessern können.

## Patentansprüche

1. Verfahren zum Synchronisieren von Stationen (MS, MSx, BS) in einem Funk-Kommunikationssystem, wobei
- zur Übertragung von Daten zwischen zumindest jeweils zwei Stationen (MS, MSx; MS, BS) zumindest eine Kommunikationsverbindung über eine Schnittstelle (V) betrieben wird,
- zur Synchronisierung anderer Stationen (MS; MSx) von einer Station (BS; MS) ein Synchronisierungssignal (S) über die Schnittstelle (V) übertragen wird, und
- die das Synchronisierungssignal (S) übertragende Station (BS; MS) das Synchronisierungssignal (S) entsprechend der eigenen Synchronisierung erzeugt und überträgt,
- die das Synchronisierungssignal (S) übertragende Station (BS;MS) ihren momentanen Synchronisierungsgrad signalisiert.
**dadurch gekennzeichnet, dass**
die synchronisierte Station (MS) ihren Synchronisierungsgrad pro vorbestimmter verstrichener Zeitdauer seit ihrer letzten eigenen Synchronisierung reduziert.

2. Verfahren nach Anspruch 1, **dadurch gekennzeichnet, dass** die Synchronisierung hinsichtlich Frequenz und/oder Zeit erfolgt.

3. Verfahren nach Anspruch 1 oder 2, **dadurch gekennzeichnet, dass** das Synchronisierungssignal (S) den momentanen Synchronisierungsgrad der Station (BS; MS) signalisiert.

4. Verfahren nach einem der vorhergehenden Ansprüche, **dadurch gekennzeichnet, dass** die Form und/oder Häufigkeit der Übertragung des Synchronisierungssignals (S) abhängig vom momentanen Synchronisierungsgrad der Station (BS; MS) erfolgt und/oder ein Wert des Synchronisierungsgrads übertragen wird.

5. Verfahren nach einem der vorhergehenden Ansprüche, **dadurch gekennzeichnet, dass** sich Stationen (MS) mit niedrigem Synchronisierungsgrad nach Stationen (BS) mit höherem Synchronisierungsgrad synchronisieren.

6. Verfahren nach einem der vorhergehenden Ansprüche, **dadurch gekennzeichnet, dass** die sich synchronisierende Station (MS; MSx) ihren Synchronisierungsgrad um zumindest eine Einheit gegenüber dem Synchronisierungsgrad der das Synchronisierungssignal (S) sendenden Station (BS; MS) erniedrigt.

7. Verfahren nach einem der vorhergehenden Ansprüche, **dadurch gekennzeichnet, dass** die Station (MS) nach Unterschreiten eines niedrigsten oder eines festgelegt niedrigen Wertes kein Synchronisierungssignal (S) überträgt.

8. Verfahren nach einem der Ansprüche 1 bis 6, **dadurch gekennzeichnet, dass** die Station (MS) trotz Unterschreiten eines niedrigsten oder eines festgelegt niedrigen Wertes ein Synchronisierungssignal (S) überträgt, falls kein anderes Synchronisierungssignal (S) auf der Schnittstelle (V) detektiert wird.

9. Verfahren nach einem der vorhergehenden Ansprüche, bei dem die das Synchronisierungssignal (S) übertragende Station (MS) zur eigenen Synchronisierung ein GPS-Signal eines GPS-Empfängers verwendet.

10. Verfahren nach einem der vorhergehenden Ansprüche, bei dem von einer anderen Station Synchronisierungssignale (S) übernommen werden und die eigene, übernommene Synchronisierung als neues Synchronisierungssignal an noch andere Stationen übertragen wird.

11. Funkkommunikationssystem, **gekennzeichnet durch** die Anwendung des Verfahrens nach einem der Ansprüche 1 bis 10, bei dem das Funkkommunikationssystem als unkoordiniertes Mobilfunksystem mit einer zellularen und/oder nicht-zellularen Struktur ausgebildet ist.

12. Funkkommunikationssystem nach Anspruch 11, bei dem das Mobilfunksystem eine TDMA- und/oder FDMA- und/oder CDMA-Betriebsart aufweist.

## Claims

1. Method for synchronizing stations (MS, MSx, BS) in a radio communications system, wherein
- for transmitting data between at least two stations (MS, MSx; MS, BS) in each case, at least one communication link is operated via an interface (V),
- for synchronizing other stations (MS; MSx), a synchronization signal (S) is transmitted via the interface (V) by one station (BS; MS), and
- the station (BS; MS) transmitting the synchronization signal (S) generates and transmits the synchronization signal (S) in accordance with its own synchronization,
- the station (BS; MS) transmitting the synchronization signal (S) signals its current degree of synchronization, **characterized in that** the synchronized station (MS) reduces its degree of synchronization per predetermined elapsed period of time since its last own synchronization.

2. Method according to Claim 1, **characterized in that** the synchronization takes place with respect to frequency and/or time.

3. Method according to Claim 1 or 2, **characterized in that** the synchronization signal (S) signals the current degree of synchronization of the station (BS; MS).

4. Method according to one of the preceding claims, **characterized in that** the form and/or rate of occurrence of the transmission of the synchronization signal (S) takes place in dependence on the current degree of synchronization of the station (BS; MS) and/or a value of the degree of synchronization is transmitted.

5. Method according to one of the preceding claims, **characterized in that** stations (MS) having a low degree of synchronization become synchronized to stations (BS) having a higher degree of synchronization.

6. Method according to one of the preceding claims, **characterized in that** the station (MS; MSx) becoming synchronized lowers its degree of synchronization by at least one unit compared with the degree of synchronization of the station (BS; MS) sending the synchronization signal (S).

7. Method according to one of the preceding claims, **characterized in that** the station (MS), after dropping below a lowest or a predetermined low value, does not transmit a synchronization signal (S).

8. Method according to one of Claims 1 to 6, **characterized in that** the station (MS), in spite of dropping below a lowest or a predetermined low value, transmits a synchronization signal (S) if no other synchronization signal (S) is detected at the interface (V).

9. Method according to one of the preceding claims, in which the station (MS) transmitting the synchronization signal (S) uses a GPS signal of a GPS receiver for its own synchronization.

10. Method according to one of the preceding claims, in which synchronization signals (S) are accepted from another station and its own accepted synchronization is transmitted to yet other stations as a new synchronization signal.

11. Radio communications system **characterized by** the application of the method according to one of Claims 1 to 10, in which the radio communications system is arranged as uncoordinated mobile radio system with a cellular and/or non-cellular structure.

12. Radio communications system according to Claim 11, in which the mobile radio system has a TDMA and/or FDMA and/or CDMA mode of operation.

## Revendications

1. Procédé pour synchroniser des stations (MS, MSx, BS) dans un système de radiocommunication,
- au moins une liaison de communication étant exploitée via une interface (V) aux fins de la transmission de données entre au moins respectivement deux stations (MS, MSx ; MS, BS),
- un signal de synchronisation (S) étant transmis par une station (BS ; MS) via l'interface (V) aux fins de la synchronisation d'autres stations (MS ; MSx) et
- la station (BS ; MS) qui transmet le signal de synchronisation (S) générant et transmettant le signal de synchronisation (S) conformément à sa propre synchronisation,
- la station (BS ; MS) qui transmet le signal de synchronisation (S) signalant son degré momentané de synchronisation,
**caractérisé en ce que**
- la station synchronisée (MS) réduit son degré de synchronisation par durée de temps prédéterminée écoulée depuis sa dernière synchronisation propre.

2. Procédé selon la revendication 1, **caractérisé en ce que** la synchronisation se produit au niveau de la fréquence et/ou le temps.

3. Procédé selon la revendication 1 ou 2, **caractérisé en ce que** le signal de synchronisation (S) signale le degré momentané de synchronisation de la station (BS ; MS).

4. Procédé selon l'une des revendications précédentes, **caractérisé en ce que** la forme et/ou la fréquence de la transmission du signal de synchronisation (S) sont fonction du degré momentané de synchronisation de la station (BS ; MS) et/ou une valeur du degré de synchronisation est transmise.

5. Procédé selon l'une des revendications précédentes, **caractérisé en ce que** des stations (MS) avec un degré de synchronisation faible se synchronisent d'après des stations (BS) avec un degré de synchronisation plus élevé.

6. Procédé selon l'une des revendications précédentes, **caractérisé en ce que** la station qui se synchronise (MSs ; MSx) réduit son degré de synchronisation d'au moins une unité par rapport au degré de synchronisation de la station (BS ; MS) qui émet le signal de synchronisation (S).

7. Procédé selon l'une des revendications précédentes, **caractérisé en ce que** la station (MS) ne transmet pas de signal de synchronisation (S) après le dépassement par le bas d'une valeur la plus faible ou d'une valeur faible fixée.

8. Procédé selon l'une des revendications 1 à 6, **caractérisé en ce que** la station (MS) transmet un signal de synchronisation (S) en dépit du dépassement par le bas d'une valeur la plus faible ou d'une valeur faible fixée si aucun autre signal de synchronisation (S) n'est détecté sur l'interface (V).

9. Procédé selon l'une des revendications précédentes, dans lequel la station (MS) qui transmet le signal de synchronisation (S) utilise un signal GPS d'un récepteur GPS aux fins de sa propre synchronisation.

10. Procédé selon l'une des revendications précédentes, dans lequel des signaux de synchronisation (S) sont pris en compte par une autre station et la propre synchronisation prise en compte est transmise en tant que nouveau signal de synchronisation à d'autres stations encore.

11. Système de radiocommunication, **caractérisé par** l'application du procédé selon l'une des revendications 1 à 10, dans lequel le système de radiocommunication est conçu comme système radio mobile non coordonné avec une structure cellulaire et/ou non cellulaire.

12. Système de radiocommunication selon la revendication 11, dans lequel le système radio mobile présente un mode de fonctionnement TDMA et/ou FDMA et/ou CDMA.
